# EUROPEAN PATENT APPLICATION

(11) **EP 3 239 792 A1**
(43) Date of publication of application: **01.11.2017**
(21) Application number: 16167611.9
(22) Date of filing: 29.04.2016
(51) Int. Cl.: G05B 19/18, H04L 29/08, B25J 9/16

(54) **SERVER BASED ROBOTIC SYSTEM AND A METHOD FOR OPERATING THE ROBOTIC SYSTEM**

(71) Applicant: Robotics Club Limited, Hong Kong (HK)
(72) Inventor: Helms, Evert, Ho Chi Minh City (VN)
(74) Representative: Rösler, Uwe

(57) **Abstract**

The invention concerns a server based robotic system providing online robot control functions comprising a robot unit having at least one actuator and / or one sensor and an I/O-interface for receiving and transmitting signals, a server unit providing executable programs for controlling the robot unit, executing actuator and/or sensor signal processing and am I/O-interface for receiving and transmitting signals and a communication network for exchanging the signals between the robot unit and the server unit.

Further a method is described for operating a robotic system using the system as mentioned before. The method comprises the following steps: a) providing executable programs for controlling the robot unit and executing actuator and/or sensor signal processing on the server unit, b) activating at least one executable program at the server and generating an output, c) transmitting the at least one output by the communication network to the robot unit and d) performing an action by the robot unit based on said output.

## Description

### Technical Field

The invention relates to a server based robotic system providing online robot control functions. Further a method is disclosed for operating a robotic system using the system mentioned before.

### Background of the Invention

Robotic systems are able to interact with and/or capable of movement in their environment. To this end these systems feature one or more actuators and/or sensors. Examples of robotic systems are industrial robots, flying or driving drones, mobile platforms, single cameras, x-y-tables, etc.. All known robotic systems have been specially designed and adapted to perform certain technical tasks, both in terms of hardware and software.

In case of changing tasks it is required to modify the robot systems to perform the new tasks. In many cases it is sufficient to manage and control the robot system on the basis of a new control software which takes into account the new task. For this a new software or software-update has to be implemented in the control unit of the robotic system.

Furthermore, the use of robot systems in a variety of applications can only be realized with a great technical effort due to the complexity of the environment. Following examples of robot applications are difficult to implement with state of the art robotic control systems:

Applications in changing and unpredictable environments, e.g. industrial environments with many product variants or unstructured workplaces or public environments that are not optimized for robots, like households, streets, offices, etc..

Applications that require context-dependent reactivity because of the above reasons. In these cases the degree of individual robot response have to be improved continuously by using real life experience, received by sensor data, and learning, e.g. by changing the program structure or functions.

All the before applications requires a big amount of sensor data and/or sensor data processing to function correct and reliably.

To cope the before mentioned applications the following existing deficits of known robot systems have to be overcome:
- Functionality of robots is often limited by their computational capacity not by available robotic functions.
- Installation procedure, testing and understanding of robotic functions from many different sources with different operation systems and programming languages is costly.
- It is difficult to continuously improve and gradually change robotic systems because of missing transparency and modularity.

Currently there are three main directions to create an automation solution using robots:
1. Use of software delivered with robots, preferably including simulation, image processing and similar functions or basic programming languages, e.g. for flying and driving drones, industrial robots or the like.
2. Open Source Libraries (e.g. OpenCV) provide sensor processing functions for Windows and Linux on PCs and have to be connected to existing robot control systems.
3. Robot control systems that provide local modular systems, e.g. ROS (Robot Operating System) from Google coming from the service robotic science community.

The main disadvantages of the known techniques for controlling robot systems are the following:
- Some software is directly linked to specific hardware and it is difficult to expand the system to other further hardware, e.g. robots and/or sensors, and processing functions
- Software have to be installed locally, sometimes on different operating systems
- If it is possible to add new sensor processing functions, the programmer needs time to understand the usage of the functions.
- The described systems lack the transparency needed for a professional, e.g. shop floor, continuous improvement of the functionality of the system

### Summary of the Invention

It is an object of the invention to overcome the before described deficits and to arrange conditions to improve versatility and customizability of existing robot systems. All necessary measures shall be cost effective and transparent and shall lead to fast robot automation of tasks.

The object is achieved by the sum total of the features in the independent claims 1 and 10. The invention can be modified advantageously by the features disclosed in the sub claims as well in the following description especially referring to preferred embodiments illustrated in figures.

The inventive idea concerns to a server based robotic system that provides online robot control functions and secures access to robotic hardware. The target of this system is to support automation of tasks fast and cost effective. Based on a modular structure and using standard interfaces, the system provides a high level of transparency and flexibility as a basis for continuous improvement of the automated task/system. By connecting robots directly to the internet it is even possible to implement the complete control of the robots online on the server. Interaction to the system is done web based by browsers or apps without any additional software installation.

The inventive server based robotic system providing online robot control functions comprises a robot unit having at least one actuator and / or one sensor and an I/O-interface for receiving and transmitting signals, a server unit providing executable programs for controlling the robot unit, executing actuator and/or sensor signal processing and an I/O-interface for receiving and transmitting signals and finally a communication network for exchanging the signals between the robot unit and the server unit.

In a preferred embodiment the server is a web server and the communication network is the internet or an intranet. The robotic system will be connected continuously or at least by demand with at least one web server so that existing robotic control functions will be put online to prevent the time and effort for installation and use of different OS-Systems. The functions will be executed on at least one web server rather than on a local computer and control robotic and sensoric hardware by using a standard IP-interfaces like http/https/udp/streaming, etc.. This way the end user does not need to care about hardware maintenance and scalability of the system.

In a further preferred embodiment the executable programs implement Common Gateway Interfaces (CGIs) forming so called CGI-programs which are language and operating system independent, to make sure each function can be developed independently. Each CGI-program has the possibility to execute any other CGI-function as well. This can create a massive parallel computing system because almost unlimited CGI-function can be executed at the same time. The execution of the CGI-programs can be done by state of the art web servers, e.g. Apache, IIS or Oracle, that allow multiple computers to be integrated.

In a further preferred embodiment the I/O-interface of the robot and the server unit each is a standard http- or https-interface, which is the most standard interface nowadays and which can be used on any browser without further installation work

In a further preferred embodiment the robot unit is at least one of the following units: Industrial robot; mobile swimming, driving or flying platforms;, humanoid robot, swarm robot, nano-robot, medical robot, toy robot, soft or compliant robot, x-y-table, or any other mechanical, electrical device with at least on sensor and/or one actuator, and wherein the sensor unit is at least one of the following units: camera, 3d cameras, bio-sensors, chemical sensors, pressure sensors, humidity sensors, position or rotation measuring sensors, distance sensor (based e.g. on optical, electromagnetic, ultrasonic, radar basis), heat sensor, sound sensor (microphone), acceleration sensor, force and torque sensors, laserscanners.

In a further preferred embodiment a device having at least a graphical user interface (GUI) capable of providing an internet browser is used as a user interface being in communication at least with the server, and said device is part of the server or a separate entity. So all the functions performed by the robot system can be tested and understood by using the user interface over a standard internet browser preferably, without any additional software installation.

Besides typing the command in the browsers address-box, testing can more conveniently be done by using downloadable pages and/or programs written in appropriate browser programming languages like for example JavaScript, Java, and Flash etc..

In a further preferred embodiment the communication at least between the user interface and the server is encrypted using SSL or TSL cryptographic protocol.

In a further preferred embodiment the server unit encompasses all necessary executable programs or has online access to executable programs available by the communication network for controlling and activating the robot unit including the at least one actuator and/or sensor, and the robot unit does not encompass any hardware unit for running executable programs for controlling and activating the robot unit including the at least one actuator and/or sensor.

In a further preferred embodiment the executable programs are provided each as independent, decoupled program from each other and being accessible and executable separately.

The invention further concerns to a method for operating a robotic system using the system described above and the method comprises the following steps:

Providing executable programs for controlling the robot unit and executing actuator and/or sensor signal processing on the server unit. Activating at least one executable program at the server and generating an output. Transmitting the at least one output by the communication network to the robot unit and performing an action by the robot unit based on said output.

In a preferred embodiment for performing the method activating of the at least one executable program on the server is performed at least by an user interface having a browser display which displays a html-page received from the server unit, and said html-page executes an embedded script made by an input which executes at least one of the executable programs on the server.

In a further preferred embodiment for performing the method the at least one executable program, which is a CGI-program, generates the output directly or communicates with other program resources provided in the server or in other hardware components addressable by the communication network first before generating the output.

In a further preferred embodiment for performing the method a multitude of CGI-programs are activated and executed such that each CGI-program is stored separately from each other and will be executed in parallel and/or serial processing.

In a further preferred embodiment for performing the method the output will be transmitted to a JavaScript or other browserbased, local script by the communication network, being internet or intranet, from the server unit at least to the robot unit. Preferably the output will be transmitted to the user interface and being displayed on the html-page.

In a further preferred embodiment for performing the method at least input and output data and sensor signals are stored and being basis for an evaluation of an efficiency of each executable program and providing a result of the evaluation, and said result will be basis for improving functionality of the system.

Storing of in- and output data of the CGI-function is carried out in the web or on the same server preferably. This data will then be used for continuously improving the system and the single functions. Each function has a definite description derived by the "turtle-model", which describes input, output, limits, responsibility and performance of a process as basis for continuous improvement derived from the "PDCA"-cycle.

### Brief Description of the Figures

The invention shall subsequently be explained in more detail based on exemplary embodiments in conjunction with the drawing. In the drawing
- Fig. 1: Overview of system concept,
- Fig. 2: Illustration showing process of loading a html/javascript GUI and executing a function,
- Fig. 3: Illustration showing process of a continuous improvement of a control system based on the proposed architecture and
- Fig. 4: Illustration showing client and server mode of a http-hardware-interface.

### Detailed Description of exemplary Embodiments

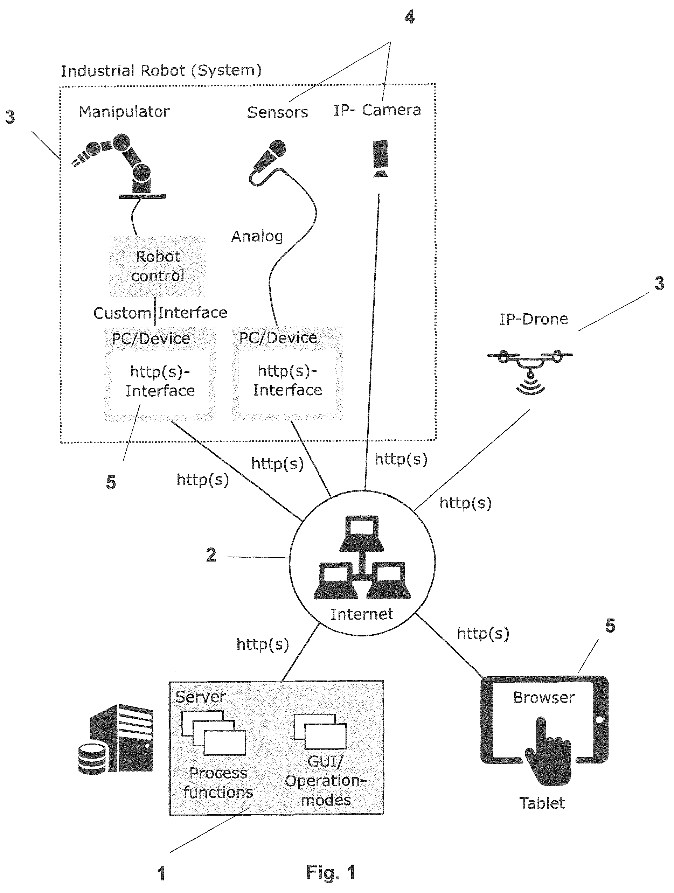

Figure 1 shows an overview of a system concept. The server system 1 is based on a web server and connected to the internet/intranet 2. This server 1 provides functions (in the form of CGI-programs) to control robots 3 (industrial robot or IP-Drone) and execute sensor processing (see figure 1). The robot 3 comprises at least one sensor 4, e.g. microphone, camera etc. which generate signals which are communicated via internet/intranet at least to the web server 1.

The connection of hardware, i.e. robots 3 and sensors 4, can be implemented in two ways, as client or as server:
1. As server the hardware 3+4 will provide an http/https interface 5 with URLs as commands to the hardware 3+4.
2. As client the robot/sensor 3+4 will periodically send POST or REQUEST http command to the server 1 in the following manner:
   A: Send data from the hardware to the server;
   B: Receive command from the server.
The advantage of the client mode is that the hardware can be operated without changing local firewalls.

Any device 5 capable of providing an internet browser can be used as user interface to any of the connected robots 3 as long as correct authentication is provided. The communication over the internet 2 is encrypted, e.g. with SSL in the case of https-communication.

The server 1 provides online functions as CGI-Files and web pages as Html pages with JavaScript designed to control the robots 3 and process sensor signals. The webpage will be downloaded to the local user interfaces 5 which will use the online functions executed on the server 1 to control the robots 3 and sensors 4.

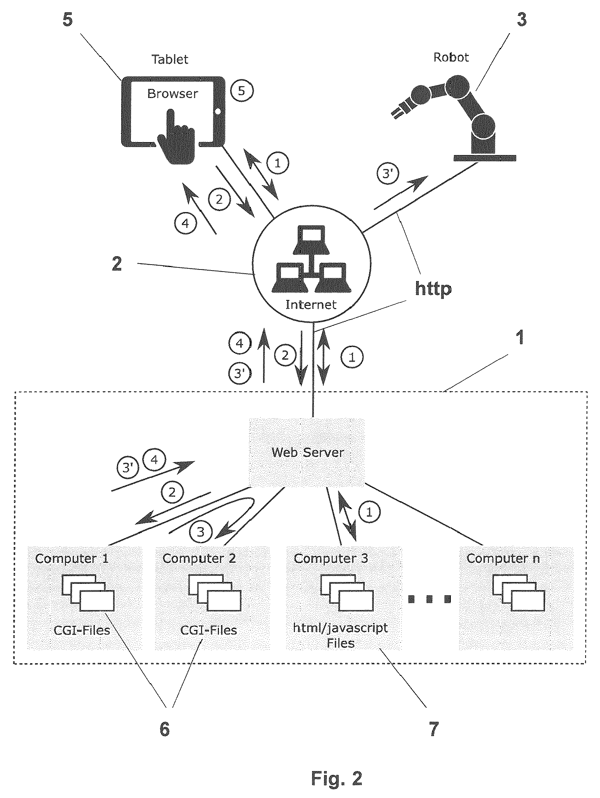

There are three further basic components of the server system 1, see figure 2, showing a process sketch illustrating loading a html/javascript GUI and executing a function:
- CGI-Programs 6 that are executed on the web server 1 and, by having access to the internet 2, can execute any task needed themselves. These functions can also call other CGI-Programs (over the internet) and thereby create a cascading function call structure.
- Client based programs or pages 7; normally in the form of html-pages embedded JavaScript programs; are downloaded from the server 1 and executed/shown inside the browser. These programs can call any internet-function and therefore also use the above described CGI-functions.
- Http(s)-based hardware connection provide a standard http-interface to access (part of) the functionality of the connected hardware. This connection can either be accessed directly on the hardware (in server mode) or on the web server (when the hardware operates in clients mode).
All three components can be accessed over http(s). In the easiest case the commands can be typed into the address bar of a browser or called out of a JavaScript program.

A basic example to access all three components from a browser is shown in figure 2:
(1): Get a html page from the server 1 and display in a browser on graphical user interface (GUI) 5.
(2): The script from the page executes a CGI function 6 on the server 1
(3): The CGI-Function 6 can use other functions (3) or use hardware (3') in the internet
(4): The result/output of this actions is returned to the html/JavaScript page 7
(5): The JavaScript program 7 processes the result and interacts with the user 6

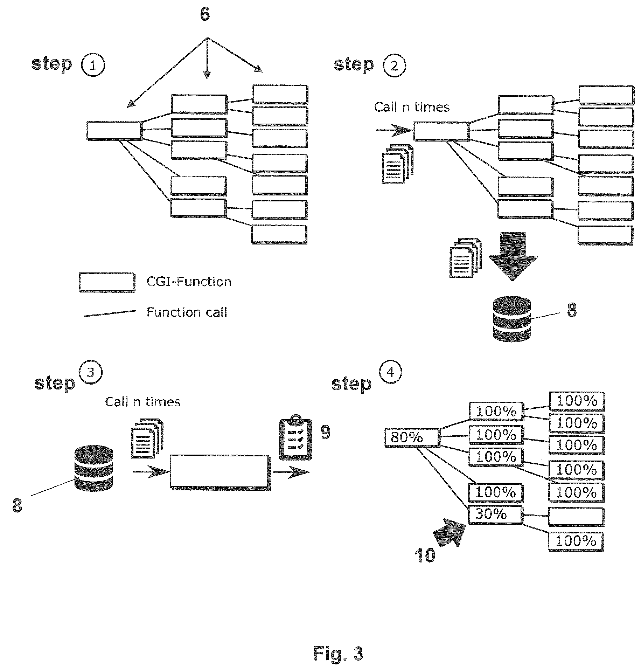

Figure 3 illustrates a process of continuous improvement of the system. As described above, one of the important requirements of the system is the ability to learn out of real life experience and change the system according to the data gathered, e.g. by a programmer, not automatically. Therefore all data sent to the CGI-function will be stored on the server 1 for this improvement procedure.

There are four steps of data processing:
- Step 1:: The system is set up for the first time. Depending on complexity a number of different CGI-function will be called/activated
- Step 2:: The system will be testing in a real environment. Data from sensors and user input will be stored for each CGI-function call as gathered data 8.
- Step 3:: After some executions of the process in question, it is possible to use the gathered data 8 to evaluate each function 6 stand alone. Hereby for all valid data (valid as described in the process specification of the function) the function 6 will be executed standalone by using a tool or typing the command directly into the browser and evaluating whether the result is compliant to the specification resulting in an analysis 9.
- Step 4:: Out of the analysis 9 for each of the functions inside a program structure it is possible to find the unreliable functions 10, see percentage value for each CGI-function. Based on this analysis 9 the process expert can decide how to improve the system, e.g. change parameters, change the structure, change/add functions, change process description/responsibility/limits/specification, etc..

The result will be a system that can be quickly and continuously improved and leads to a more reliable (=functional) system.

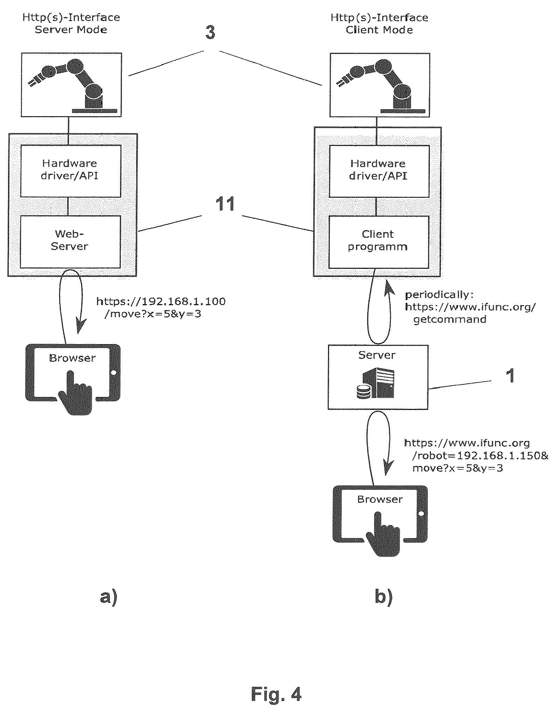

In figure 4a a server mode of a http-hardware-interface and in figure 4b a client mode of a http-hardware-interface are illustrated.

To provide a standard http-interface for hardware 3 that does not implement this by default an interface 11 needs to be created. This can be done as an http-client or http-server.

For both modes a hardware interface need to be implemented. This interface has both the hardware interface to connect to the robot/sensor 3 as well as an IP-capable connection, e.g. Wifi, LAN, Mobile like 3G or similar.

In the server mode, see figure 4a, this interface 11 acts like a web server 1 and receives http(s)-request (POST or REQUEST), executes the command on the hardware and return a result. The advantage of this mode is, that the device can run stand alone in the internet. The disadvantages are the need of a fixed IP-address and configuration of the firewall/router to let the signal pass and further, in case of many simultaneous requests the hardware/bandwidth may be not sufficient to handle all requests (overload)

In the client mode, see figure 4b the interface 11 periodically, e.g. 10 times per second, sends an http(s)-request to the server 1 to receive new commands. For users/CGI-function it is then possible to address directly the server 1 and the hardware fetches then the command from the server 1.

Summarize of advantages of the inventive system:
- Robots only need minimal processing power and "average" internet bandwidth to access an almost unlimited variety and computational power of robotic control functions. This can lead to low cost systems (up to disposable robots)
- By having each function represented by a single (CGI-) executive file it is very easy to create even the most complex control systems distributed by different team members
- The system is inherently scalable, that means functions or additional level of functionality can be added any time without the need to change the hardware.
- With the hierarchical system structure it is possible to continuously improve the reliability and functionality of the software because each software function is debug- and testable
- It is easy to identify which module needs improvement or to decide the system structure needs to be adjusted
- The input and output data of each sub function can be saved/logged/recorded as input for improvement or any other data usage (big data).

### List of References Numerous

- 1: Server
- 2: Internet/intranet
- 3: Robot
- 4: Sensor
- 5: interface
- 6: CGI-program
- 7: Client based programs or pages
- 8: gathered data
- 9: analysis
- 10: Unreliable/reliable functions
- 11: interface

## Claims

1. Server based robotic system providing online robot control functions comprising:
- a robot unit having at least one actuator and / or one sensor and an I/O-interface for receiving and transmitting signals,
- a server unit providing executable programs for controlling the robot unit, executing actuator and/or sensor signal processing and an I/O-interface for receiving and transmitting signals
- a communication network for exchanging the signals between the robot unit and the server unit.

2. System according to claim 1,
wherein the server is a web server and the communication network is the internet or an intranet.

3. System according to claim 1 or 2,
wherein the executable programs implement common gateway interfaces (CGIs) forming CGI-programs.

4. System according to claims 1 to 3,
wherein the I/O-interface of the robot and the server unit each is a standard http- or https-interface.

5. System according to one of the claims 1 to 4,
wherein the robot unit is at least one of the following units: Industrial robot; mobile swimming, driving or flying platforms;, humanoid robot, swarm robot, nano-robot, medical robot, toy robot, soft or compliant robot, x-y-table, or any other mechanical, electrical device with at least on sensor and/or one actuator, and
wherein the sensor unit is at least one of the following units: camera, 3d cameras, bio-sensors, chemical sensors, pressure sensors, humidity sensors, position or rotation measuring sensors, distance sensor (based e.g. on optical, electromagnetic, ultrasonic, radar basis), heat sensor, sound sensor (microphone), acceleration sensor, force and torque sensors, laserscanners.

6. System according to one of the claims 1 to 5,
wherein a device having at least a graphical user interface (GUI) capable of providing an internet browser is used as a user interface being in communication at least with the server, and said device is part of the server or a separate entity.

7. System according to claim 6,
wherein the communication at least between the user interface and the server is encrypted using SSL or TSL cryptographic protocol.

8. System according to one of the claims 1 to 7,
wherein the server unit encompasses all necessary executable programs or has online access to executable programs available by the communication network for controlling and activating the robot unit including the at least one actuator and/or sensor, and the robot unit does not encompass any hardware unit for running executable programs for controlling and activating the robot unit including the at least one actuator and/or sensor.

9. System according to one of the claims 3 to 8,
wherein the executable programs are provided each as independent, decoupled program from each other and being accessible and executable separately.

10. Method for operating a robotic system using the system of one of the claims 1 to 9, comprising the following steps:
- providing executable programs for controlling the robot unit and executing actuator and/or sensor signal processing on the server unit,
- activating at least one executable program at the server and generating an output,
- transmitting the at least one output by the communication network to the robot unit and
- performing an action by the robot unit based on said output.

11. Method according to claim 10,
wherein activating of the at least one executable program on the server is performed at least by an user interface having a browser display which displays a html-page received from the server unit, and said html-page executes an embedded script made by an input which executes at least one of the executable programs on the server.

12. Method according to claim 10 or 11,
wherein the at least one executable program, which is a CGI-program, generates the output directly or communicates with other program resources provided in the server or in other hardware components addressable by the communication network first before generating the output.

13. Method according to claim 12,
wherein a multitude of CGI-programs are activated and executed such that each CGI-program is stored separately from each other and will be executed in parallel and/or serial processing.

14. Method according to one of the claims claim 10 to 13,
wherein the output will be transmitted to a JavaScript or other browserbased, local script by the communication network, being internet or intranet, from the server unit at least to the robot unit.

15. Method according to claim 14,
wherein the output will be transmitted to the user interface and being displayed on the html-page.

16. Method according to one of the claims 11 to 15,
wherein at least input and output data and sensor signals are stored and being basis for an evaluation of an efficiency of each executable program and providing a result of the evaluation, and
said result will be basis for improving functionality of the system.
